# EUROPEAN PATENT SPECIFICATION

(11) **EP 2 456 254 B1**
(45) Date of publication and mention of the grant of the patent: **30.04.2014**
(21) Application number: 12155698.9
(22) Date of filing: 26.07.2007
(51) Int. Cl.: H04W 24/00, H04W 88/08

(54) **A tower mounted amplifier gain adjusting method, system and the tower mounted amplifier**
Verstärkungs-Regelungverfahren für Mast-Montierten Verstärker, System und Mast-Montierten Verstärker dafür
Procédé de réglage de gain pour amplificateur monté sur pylône, système et amplificateur sur pylône correspondant

(30) Priority: 29.07.2006 CN 200610100942
(43) Date of publication of application: 23.05.2012
(62) Divisional of application: 07764282.5
(73) Proprietor: Huawei Technologies Co., Ltd., Longgang District, Shenzhen Guangdong 518129 (CN)
(72) Inventor: Sun, Weidong, 518129 Shenzhen Guangdong (CN)
(74) Representative: Körber, Martin Hans

(56) References cited:
- "Antenna Interface Standards Group, Standard No.AISG v2.0. Control interface for antenna line devices", INTERNET CITATION, 13 June 2006 (2006-06-13), XP008131526, Retrieved from the Internet: URL:http://www.torni.fi/aisg/AISG%20v2.0%2 0.pdf [retrieved on 2011-01-13]
- "3rd Generation Partnership Project, Technical Specification Group Radio Access network, UTRAN Iuant Interface: Application Part (Release 7)", 3GPP TS 25.466 V7.1.0,, 1 June 2007 (2007-06-01), XP008131527,

## Description

### FIELD OF THE INVENTION

The present invention relates to the field of communication, and more particularly to a method and system for gain adjustment of the Tower Mounted Amplifier and a Tower Mounted Amplifier.

### BACKGROUND

A Tower Mounted Amplifier (TMA) is used to adjust loss of signals gain causing by over-length radio feedback cables. The TMA is located between an antenna and a base station, and generally used under the situation that a distance between antennae and base stations is very long.

In the Antenna Interface Standards Group (AISG) protocol, with Standard No. AISGI: Issue 1.1 30 July 2004, the TMA gain is prescribed to have a characteristic that the gain is adjustable. And the characteristic has obvious advantage that the TMA gain can be directly adjustable by means of command without changing the TMA even under the situation that the length of radio feedback cables is changed.

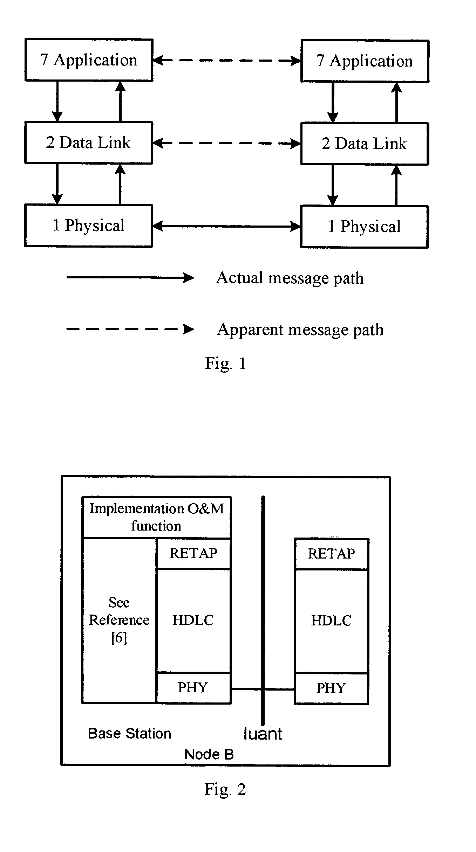

In order to implement the mutual information transmission among commutation apparatus, the AISG establishes a set of protocols for the Remote Electrical Tilting (RET) and the TMA, and the Open System Interconnect Reference Model (OSI Model). The reference model of the protocol is shown in FIG. 1. Meanwhile, the 3rd Generation Partnership Project (3GPP) establishes an Iuant protocol for the RET referencing the AISG protocol. The reference model of the Iuant protocol is shown in FIG. 2. In the AISG protocol, the gain adjustment of the TMA is implemented on the 7th Application layer of the AISG protocol. Generally, it is called Tower Mounted Amplifier Application Protocol (TMAAP), and similar to the RET Application Protocol (RETAP) of the 3GPP.

Setting the TMA gain and querying the TMA gain interface are clearly defined in the AISG protocol. Setting the TMA gain and querying the TMA gain interface are shown as Table 1.

**TABLE 1**

| Device specific commands (TMA) | |
|---|---|
| Command | Command number |
| Set TMA Mode | 0x40 |
| Get TMA Mode | 0x41 |
| Set TMA Gain | 0x42 |
| Get TMA Gain | 0x43 |

On the TMAAP protocol layer, as a prior art, the gain range of the TMA supported by hardware is queried generally in the way of Get Device Data command, that is, the gain range of the TMA supported by the hardware is queried in the way of obtaining device data. The command format for querying the gain range of the TMA supported by the hardware is as follows:
Get Device Data
Command Name: GetDeviceData

The command is adopted to read the prescribed configuration data stored in a field and the data of parameters listed in an Appendix D. If users hope to read the data from those fields which are not supported by some specific apparatus, relevant data that users hope to get will not be returned from the fields. The command includes a series of the field numbers of those fields whose contents are to be returned in the response from the secondary node. The field numbers are not necessarily contiguous or ordered.

When the command is executed, a data format which is Data field command to secondary station sent to a data field of the secondary node is as follows:
0x0F <LengthLowByte><LengthHighByte><0x01 <0x02> <0x03> ... <0x0N>

Fields involved in the data format are the TMA relevant parameters in the Appendix D of the AISG protocol. 0x0F represents a digital code of a sending command. F represents that the digital code is represented by hex. The field <LengthLowByte> represents the length of low bytes of the data required to be returned. The field <LengthHighByte> represents the length of high bytes of the data required to be returned. 0x01, 0x02, 0x03... 0x0N are Field No. in a queried attribute table, as shown in Table 1.

If the data is read successfully, i.e. there is no error when the command is executed; responding data of each data field are returned from the secondary node. The format of the returned data which is Data field response from the secondary station is:
0x0F <LengthLowByte><LengthHighByte> <OK> <0x01><data bytes for parameter1> <0x02> <data bytes for parameter 2> <0x03><data bytes for parameter 3>...<0x0N> < data bytes for parameter N>

In the data format, the meaning of fields including 0x0F, <LengthLowByte>, <LengthHighByte> and <0x01>, <0x02>, <0x03>... <0x0N> is the same as the above. The field <OK> represents that the data is read successfully at this time. The fields including <data bytes for parameterl>, <data bytes for parameter 2>, <data bytes for parameter 3>... < data bytes for parameter N> represent the data of parameters 1, 2, 3... N returned from the fields <0x01>, <0x02>, <0x03>... <0x0N> respectively.

If the data is read unsuccessfully, i.e. there are some errors when the command is executed, that is, if users desire to read data from those fields which aren't supported by some specific apparatus, the relevant data that users desire to get will not be returned from the fields. The format of the returned data, that is, Data field response from secondary station in case of error in performing the command is:
0x0F<LengthLowByte><LengthHighByte><FAIL><ReturnCode 1 >...<ReturnCodeN>

In the data format, the meaning of fields including 0x0F, <LengthLowByte> and <LengthHighByte> is the same as the above. The field <FAIL> represents that the command of reading data fails at this time. The fields <ReturnCodel>... <ReturnCodeN> represent the numbers of the returned fields which are not supported by the specific apparatus respectively.

The relevant parameters of the TMA in Appendix D are illustrated in the Table 2 and Table 3. 0x01, 0x02, Ox03... 0x0N mentioned in the above command are similar to 0x11, 0x12, 0x13, 0x14... 0x18 in the Field No. column 1 of Table 1. Table 1 just lists (0x11, 0x12, 0x13, 0x14... Ox18) which are a part of the Field No. of TMA. 0x01, 0x02... before 0x11 are omitted. The N in 0x0N represents a natural number of all Field No. in the queried attribute table of the TMA.

**TABLE 2: Queried Attribute Table of the TMA**

| Field No. | Length (bytes) | Format | Description |
|---|---|---|---|
| TMA | | | |
| 0x11 | 15 | ASCII | TMA model number |
| 0x12 | 17 | ASCII | TMA Serial number |
| 0x13 | 1 | 8-bit unsigned | TMA type: see below |
| 0x14 | 4 | 32-bit unsigned | TMA receive frequency band (see below) |
| 0x15 | 4 | 32-bit unsigned | TMA transmit frequency band (see below) |
| 0x16 | 1 | 8-bit unsigned | Maximum supported gain (dB/4) |
| 0x17 | 1 | 8-bit unsigned | Minimum supported gain (dB/4) |
| 0x18 | 1 | 8-bit unsigned | Gain resolution (=dB/4) |

**TABLE 3: TMA type Attribute Value contents**

| | Field 0x13 |
|---|---|
| Bit No. | TMA Type |
| 1 | Bypass |
| 2 | VSWR |
| 3 | Reserved |
| 4 | Reserved |
| 5 | Reserved |
| 6 | Reserved |
| 7 and above | Reserved |

Referring to the above prior art about the TMA gain adjustment, the inventor finds out at least the following problems of the prior art in the process of implementing the present invention.

At first, an original interface already can not express the practical demand clearly according to the used prior art currently. In the prior art, the command TMA Set Gain of the AISG 2.0 describes as follows: For non-linear steps: Gdemanded must be equal to a supported value, that is, steps of the non-linear gain adjustment prescribed in the AISG 2.0 must be a value which is a TMA supported value of the gain adjustment supported by the TMA. However the TMA supported value is not given definitely in the AISG 2.0. It may include values as follows: Gmin, Gmax, even may be a value between the Gmin and Gmax. And the description in the TMA Get Supported Functions is as follows: If the resolution is zero, then the non-linear gain steps are supported (e.g. 3dB and 6dB and 12dB). Here the non-linear gain steps just are illustrated that they may be 3dB, 6dB or 12dB by an example, and also may be 24dB indefinitely. Therefore, the original interface can't express the practical demand clearly.

Furthermore, the gain adjustment steps supported by different kinds of TMA and whether the gain adjustment is supported or not are different because there are a variety of TMA, such as 12dB TMA, 24dB TMA, and 48dB TMA. However, in the prior art, only the failure of execution of a relevant command by he TMA can be known, but whether the gain of the current TMA is adjustable or not may not be known by using the prior art if the gain adjustment steps corresponding to the TMA used currently are the gain adjustment steps which is not supported by hardware. It can be seen from the prior art that using the prior art to implement the TMA gain adjustment is comparatively passive, and technicians can not know the status of the gain of the current TMA adjustment in time.

Therefore, the prior art of the TMA gain adjustment can not meet the need of the actual utilization situation of the current TMA. A new technical solution that can solve these problems is desired to put forward so as to enable users to definitely know whether the gain of the TMA working currently is adjustable according to a given adjustment steps and range and improve the maintainability and availability of the apparatus.

### SUMMARY

Considering the problems existing in the above mentioned prior art, the embodiments of the present invention provide a method and a maintenance end so as to enable the maintenance end to definitely obtain a gain adjustment type supported by a TMA and to perform the gain adjustment according to a gain adjustment step supported by the TMA, and improve the maintainability and utilization of the TMA.

An embodiment of the present invention provides a method for gain adjustment of the TMA, including the following steps:

Received from the TMA, a maintenance end receives information indicating whether gain of the TMA is adjustable and whether the TMA supports a non-linear adjustment, the number of non-linear gain adjustment values supported by the TMA and a step value of a non-linear gain adjustment supported by the TMA, wherein the information comprises: Gmax, the maximum gain value supported by the TMA, Gmin, the minimum gain value supported by the TMA, and Gain resolution, the step value of the linear adjustment gain supported by the TMA; and

the maintenance end performs the non-linear adjustment to the gain of the TMA according to the received step value of the non-linear gain adjustment when the maintenance end determines that the gain of the TMA is adjustable and the TMA supports the non-linear gain adjustment according to the received information.

An embodiment of the present invention provides a maintenance end for gain adjustment of a tower mounted amplifier, TMA.

The maintenance end includes: a receiving module, configured to receive from the TMA, information indicating whether gain of the TMA is adjustable and whether the TMA supports a non-linear gain adjustment, the number of non-linear gain adjustment values supported by the TMA and a step value of the non-linear gain adjustment supported by the TMA, wherein the information comprises: Gmax, the maximum gain value supported by the TMA, Gmin, the minimum gain value supported by the TMA, and Gain resolution, the step value of the linear adjustment gain supported by the TMA; and a responding gain adjustment module, configured to perform the non-linear gain adjustment to gain of the TMA according to the received step value of the non-linear gain adjustment when the maintenance end determines that the gain of the TMA is adjustable and the TMA supports the non-linear gain adjustment according to the information received by the receiving module.

From the above technical solution provided by the embodiments of the present invention, it can be seen that, in the embodiments of the present invention, the maintenance end may perform the non-linear adjustment to the gain of the TMA according to the non-linear gain adjustment step supported by the TMA when the maintenance end determines the gain of the TMA is adjustable and the TMA supports the non-linear gain adjustment according to the received determination information. The maintainability and utilization of the TMA are improved.

### BRIEF DESCRIPTION OF THE DRAWING(S)

FIG. 1 illustrates a relative seven layers protocol of the OSI Model;

FIG. 2 illustrates a structure of an Iuant interface protocol;

FIG.3 illustrates a flowchart illustrating the operation for setting the TMA gain adjustment in accordance with an embodiment of the present invention; and

FIG. 4 illustrates a flowchart illustrating the operation for setting the TMA gain adjustment in accordance with another embodiment of the present invention.

### DETAILED DESCRIPTION

The embodiment of the present invention provides a convenient and flexible method to easily implement the TMA gain adjustment so as to consummate the function of the TMA gain adjustment and make the process of the TMA gain adjustment more transparent. The situation of low maintainability of the apparatus and low inefficient of the gain adjustment are improved.

A step value of the non-linear gain adjustment is stored in the TMA in the embodiments of the present invention. The TMA may send information indicating whether the gain of the current TMA is adjustable and whether it supports the non-linear adjustment to a maintenance end. The procedure may be initiated by an instruction, sent from the maintenance end to the TMA, of querying whether the gain of the current TMA is adjustable, or may also be information, initiatively reported by the TMA to the maintenance end, indicating whether the gain of the current TMA is adjustable. The maintenance end performs non-linear adjustment of the gain of the current TMA according to the step of the non-linear gain adjustment transmitted by the TMA when the maintenance end determines that the gain of the current TMA is adjustable and it supports the non-linear gain adjustment according to the received information. The embodiment of the present invention enables the maintenance end to obtain whether the gain of the current TMA supports the non-linear adjustment in the way of querying. If the TMA gain supports the non-linear adjustment, the gain adjustment may be set according to the gain adjustment step through a relevant command. The embodiments of the present invention can realize the gain adjustment of the TMA effectively, conveniently and safely, i.e. the embodiments can conveniently achieve the query for whether the gain of the current TMA is adjustable and whether it supports the non-linear adjustment so as to effectively solve the problems such as the maintenance end can not obtain whether the gain of the current TMA is adjustable. The maintenance end may conveniently obtain whether the gain of the current TMA is adjustable and whether it may perform the gain adjustment according to a given step value and range so as to improve the maintainability and utilization of the TMA.

The operation flow that the embodiment of the present invention implements the gain adjustment of the TMA includes:

Step 1: The maintenance end obtains the gain adjustment type supported by the current TMA. The step 1 may be realized through two means as follows.

Means 1, the maintenance end sends a query message carrying information for querying whether the gain of the current TMA is adjustable and whether it supports the non-linear adjustment. After the TMA receives the query message, it returns information indicating whether the gain of the current TMA is adjustable and whether it supports the non-linear adjustment to the maintenance end. The maintenance end obtains whether the gain of the current TMA is adjustable and whether it supports the non-linear adjustment according to the information returned by the TMA.

Means 2, the maintenance end obtains whether the gain of the current TMA is adjustable and whether it supports the non-linear adjustment according to the message which carries the information indicating whether the gain of the current TMA is adjustable and whether it supports the non-linear adjustment, the message is reported by the TMA initiatively.

In the step 1, the maintenance end may obtain the gain adjustment type supported by the current TMA according to the received message. That is, the procedure that the maintenance end obtains the gain adjustment type supported by the current TMA may be implemented by the query message for querying whether the gain of the current TMA is adjustable and whether it supports the non-linear adjustment sent from the maintenance end to the TMA, and may also be implemented by the information initiatively reported by the TMA indicating whether the gain of the current TMA is adjustable and whether it supports the non-linear adjustment to the maintenance end.

Step 2: The maintenance end judges whether the TMA supports the gain adjustment and the supported gain adjustment type;

When the maintenance end determines that the gain of the current TMA is un-adjustable, step 3 is executed;

When the maintenance end determines that the gain of the current TMA is adjustable but cannot support the non-linear adjustment, that is, the gain of the current TMA supports a linear adjustment, step 4 is executed; and

When the maintenance end determines that the gain of the current TMA is adjustable and supports the non-linear adjustment, step 5 is executed.

Step 3: The maintenance end may set the TMA working mode, but does not adjust the gain of the current TMA. For example, when the maintenance end queries that the gain of the current TMA is un-adjustable, it may only set the TMA as normal or bypass through the Set TMA Mode (the TMA mode setting command) to make the TMA work under a maximum gain mode or a minimum gain (bypass) mode, but may not adjust the gain through the Set TMA Gain (the TMA gain setting command).

Step 4: The maintenance end may determine whether the TMA works under the currently adjustment gain or under the minimum TMA gain through the TMA mode setting command which is Set TMA Mode. The maintenance end may also perform the linear adjustment to the gain of the current TMA through the TMA gain setting command which is Set TMA Gain. The range of the gain adjustment is: not less than the minimum gain supported by the TMA, and not more than the maximum gain supported by the TMA.

For example, when the maintenance end queries that the gain of the current TMA is adjustable, it may set the TMA as the normal or the bypass through the Set TMA Mode to make the TMA work under the currently adjustment gain or the minimum gain (bypass) mode. Meanwhile, the current gain may be set through the Set TMA Gain according to an adjustment step (Field No. 0x18).

Step 5: The maintenance end performs the non-linear adjustment to the gain of the current TMA through the TMA gain setting command which is the Set TMA Gain. The range of the gain adjustment value is: the gain adjustment value supported by the TMA. Besides, the maintenance end also sets whether the TMA works under the currently adjustment gain or the minimum TMA gain through the TMA gain setting command which is the Set TMA Gain.

The specific operation flow of the embodiment of the present invention is explained with reference to the drawings.

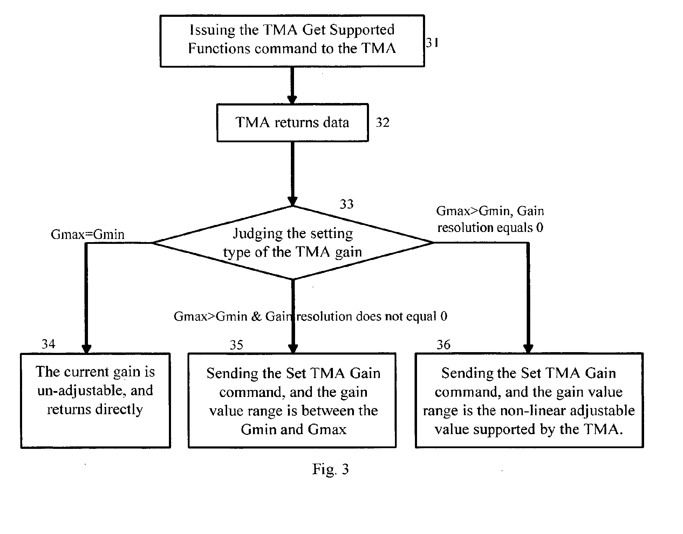

Embodiment 1: A means of adding a TMA non-linear gain steps Value in the command of TMA Get Supported Functions to determine the gain of the current TMA as an adjustment step of the non-linear gain steps. The specific operation flow is shown in Fig. 3.

In Fig. 3, step 31: The maintenance end issues the TMA Get Supported Functions (an obtaining command of the TMA supported function) to the TMA.

Step 32: The TMA returns parameter data supported by the TMA according to the command issued by the maintenance end. The parameter data includes Gmax (the maximum gain value supported by the TMA), Gmin (the minimum gain value supported by the TMA), Gain resolution (the step value of the linear adjustment gain supported by the TMA) and non-linear gain supported value (the step value of the non-linear adjustment gain supported by the TMA).

Step 33: The maintenance end judges the gain adjustment type supported by the TMA, that is, judges whether the TMA gain is adjustable and whether it supports the non-linear adjustment according to the parameter data returned by the TMA;

If the Gmax equals the Gmin in the returned parameter data, the TMA is explained that the TMA supports a fixed gain, that is, the TMA gain is un-adjustable, and step 34 is executed;

If the Gmax is greater than the Gmin and the Gain resolution does not equal 0 in the returned parameter data, the TMA is explained that the TMA is adjustable and is adjustable linearly, that is, it is adjustable in linear gain steps, and step 35 is executed;

If the Gmax is greater than the Gmin and the Gain resolution equals 0 in the returned parameter data, the TMA is explained that the TMA is adjustable and is adjustable non-linearly, that is, it is adjustable in non-linear gain steps, and step 36 is executed;

Step 34: The maintenance end may determine the TMA working mode by setting the TMA mode, but can not adjust the gain of the current TMA.

Step 35: The maintenance end issues a Set TMA Gain command (TMA gain setting command) to the TMA. Every time, the gain value after the gain adjustment is Gmin+n× Gresolution where Gmin means the minimum gain value supported by the TMA, Gresolution is the step value of the linear adjustment gain supported by the TMA, that is Gain resolution, and n which is a nonnegative integer means the times of the TMA linear gain adjustment.

Step 36: The maintenance end issues the Set TMA Gain command down to the TMA according to the non-linear gain supported value in the received parameter data return by the TMA. That is, the maintenance end performs the non-linear adjustment to the TMA gain according to the non-linear gain supported value, and every time, the gain value in the non-linear gain adjustment must be the non-linear gain adjustment value supported by the TMA.

In the communication field, it is needed to explain that the inter-communication among the apparatus follows a definite communication protocol or a communication standard. The TMA is no exception. The communication between the TMA and the maintenance end also must follow a relevant communication protocol. When the implement of the above operation flow depends on the AISG, the embodiment of the present invention may amend the parameters of Appendix D in the AISG protocol, and the TMA query attribute list after amending is shown as Table 4.

**Table 4: TMA query attribute list after amending**

| Field No. | Length(bytes) | Format | Description |
|---|---|---|---|
| TMA | | | |
| 0x11 | 15 | ASCII | TMA model number |
| 0x12 | 17 | ASCII | TMA Serial number |
| 0x13 | 1 | 8-bit unsigned | TMA type: see below |
| 0x14 | 4 | 32-bit unsigned | TMA receive frequency band (see below) |
| 0x15 | 4 | 32-bit unsigned | TMA transmit frequency band (see below) |
| 0x16 | 1 | 8-bit unsigned | Maximum supported gain (dB/4) |
| 0x17 | 1 | 8-bit unsigned | Minimum supported gain (dB/4) |
| 0x18 | 1 | 8-bit unsigned | Gain resolution (=dB/4) |
| 0x19 | 1 | 8-bit integer | Number of non-linear gain values supported (N) |
| i+0x19 | 1 | 8-bit integer | Non-linear gain supported value number i (expressed in dB/4) |

Thereinto, i=1~N.

From the Table 4, it can be seen that the embodiment of the present invention adds the gain value of the non-linear gain supported by the TMA into the parameters of Appendix D in the AISG protocol. The specific amended parameters are shown as the content in the row of the Number of non-linear gain values supported (range: N) and in the row of the Non-linear gain supported value number i (expressed in dB/4) in the Table 4.

0x19 means the gain value, which is expressed in dB, of the non-linear gain supported by the TMA. That is, the value range of the Number of non-linear gain values supported is N, and N means the number of the non-linear adjustment gain value supported by the TMA; i+0x19 means the gain value, which is expressed in dB/4, of the non-linear gain supported by the TMA, that is, the non-linear gain supported value i given as gain figure expressed in dB/4; i means the serial number of the non-linear adjustment gain value supported by the TMA, and the range of the value is 1~N.

Now, a response of the command of TMA Get Supported Functions in the AISG2.0 is described in the Table 5.

**Table 5: Response message parameters and format for TMA Get Supported Functions**

| Number | Length | Type | Description |
|---|---|---|---|
| 1 | 1 octet | Unsigned integer | Subunit number |
| 2 | 1 octet | ReturnCode | Return code OK |
| 3 | 1 octet | Unsigned integer | Function flags |
| 4 | 1 octet | Unsigned integer | Min Gain capability (expressed in dB/4) |
| 5 | 1 octet | Unsigned integer | Max Gain capability (expressed in dB/4) |
| 6 | 1 octet | Unsigned integer | Resolution capability expressed in dB/4) |

The embodiment of the present invention amends the description of the response of the command TMA Get Supported Functions in the AISG2.0 shown in the Table 6.

**Table 6: The description of the response of the command TMA Get Supported Functions**

| Number | Length | Type | Description |
|---|---|---|---|
| 1 | 1 octet | Unsigned integer | Subunit number |
| 2 | 1 octet | Return Code | Return code OK |
| 3 | 1 octet | Unsigned integer | Function flags |
| 4 | 1 octet | Unsigned integer | Min Gain capability |
| | | | (expressed in dB/4) |
| 5 | 1 octet | Unsigned integer | Max Gain capability |
| | | | (expressed in dB/4) |
| 6 | 1 octet | Unsigned integer | Resolution capability |
| | | | (expressed in dB/4) |
| 7 | 1 octet | Unsigned integer | Number of non-linear gain values supported (N) |
| i+7 | 1 octet | Unsigned integer | Non-linear gain supported value number i |
| | | | (expressed in dB/4) |

In the Table 6, i=1~N. The description of the response of the TMA Get Supported Functions after amending is added with the description term of the response to the non-linear gain adjustment supported by the TMA by the TMA Get Supported Functions. The row of the Number of the non-linear gain values supported (N) in the Table 6 is corresponding with the row of the Number of the non-linear gain values supported (N) in the Table 4, which is the description term of the response to the non-linear gain adjustment supported by the TMA by the TMA Get Supported Functions. The row of the Non-linear gain supported value number i (expressed in dB/4) in the Table 6 is corresponding with the row of the Non-linear gain supported value number I (expressed in dB/4) in the Table 4, which is the description item of the response to the non-linear gain adjustment supported by the TMA by the TMA Get Supported Functions.

In addition, the specific amended parameter in the Appendix D may also be the content in the row of the non-linear gain supported value i given as gain figure expressed in dB/4 in the Table 4. When the specific amended parameter in the Appendix D is only the content in the row of the non-linear gain supported value i given as gain figure expressed in dB/4 in the Table 4, the description item of the response to the non-linear gain adjustment supported by the TMA by the TMA Get Supported Functions corresponding to it in the Table 6 is only the content in the row of the non-linear gain supported value N given as gain figure expressed in dB/4 in the Table 6; the 0x19 in the Table 4 may also be 0x20 or another code. The 0x19 is taken as an example only for conveniently explaining the amendment of the AISG 2.0 protocol, and it may be any usable Field No. of the TMA in the practical application.

The value range of the non-linear gain steps value supported by TMA may be determined by adding the above two items of content.

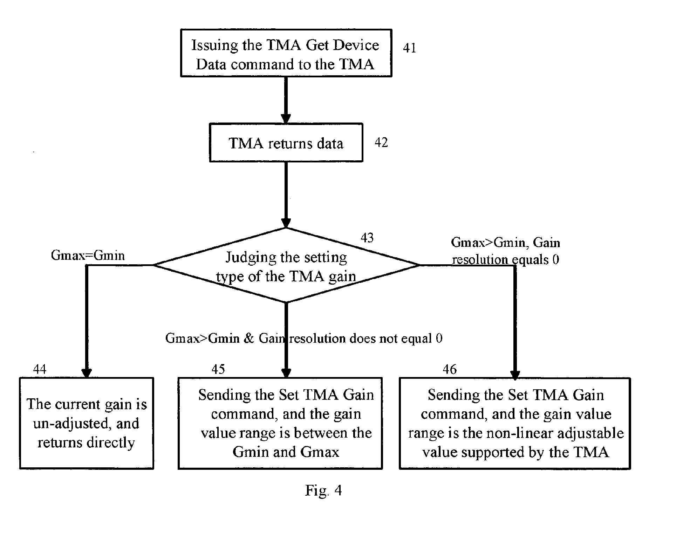

Embodiment 2: A means of adding TMA non-linear gain steps Value into the command of TMA Get Device Data An is adopted to enable the maintenance end to obtain that the current TMA supports the non-linear gain adjustment of which the step value is the non-linear gain steps. The specific operation flow is shown in Fig. 4 as follows:

To Step 41: The maintenance end issues the TMA Get Device Data (the obtaining command for the TMA device data) to the TMA.

To Step 42: The TMA returns TMA attribute data which is the TMA parameters of the Appendix D in the AISG protocol according to the received command issued by the maintenance end. The TMA attribute data includes the content of a Field whose No. is 0x16, 0x17, 0x18 and 0x19 in the TMA attribute query list in the Appendix D, which is the content in the row of the Field No. being 0x16, 0x17, 0x18 and 0x19 in the Table 3.

The content in the row with the Field No. of 0x16 is the maximum gain value supported by the TMA, which is expressed by dB/4 as the unit and is expressed with Gmax. The content in the row with the Field No. of 0x17 is the minimum gain value supported by the TMA, which is expressed by dB/4 as the unit and is expressed with Gmin. The content in the row with the Field No. of 0x18 is the linearly adjustable step value supported by the TMA gain, which is expressed by dB/4 as the unit and is expressed with Gain resolution. The content in the row with the Field No. of 0x19 is the non-linearly adjustable step value supported by the TMA gain, which is expressed by dB or dB/4 as the unit and is expressed with the non-linear gain steps;

To Step 43: The maintenance end judges the gain adjustment type supported by the TMA according to the TMA attribute data returned by the TMA. That is, the maintenance end judges whether the TMA gain is adjustable and whether it supports non-linear adjustment;

If the Gmax equals the Gmin in the returned attribute data, the TMA is a fixed gain TMA, that is, the TMA gain is un-adjustable, and step 44 is executed;

If the Gmax is greater than the Gmin and the Gain resolution does not equal 0 in the returned attribute data, the TMA is explained that the TMA gain is adjustable and is adjustable linearly, that is, it is adjustable by the linear gain steps, and step 45 is executed;

If the Gmax is greater than the Gmin and the Gain resolution equals 0 in the returned attribute data, the TMA is explained that the TMA gain is adjustable and is adjustable non-linearly, that is, it is adjustable by the non-linear gain steps, and step 46 is executed;

Step 44: When the maintenance end determines that the TMA gain is un-adjustable, only the working mode of the TMA may be set and the gain of the current TMA is un-adjustable.

Step 45: When the maintenance end determines that the TMA gain is adjustable and is adjustable linearly, the maintenance end issues the Set TMA Gain command (TMA gain setting command) to the TMA. Every time, the gain value of the gain adjustment is Gmin+n× Gresolution where Gmin means the minimum gain value supported by the TMA; Gresolution is the step value of the linear adjustment gain supported by the TMA, that is, Gain resolution, and n which is a nonnegative integer means the times of linear gain adjustment of the TMA.

Step 46: When the maintenance end determines that the TMA gain is adjustable and is adjustable non-linearly, the maintenance end issues the Set TMA Gain command to the TMA according to the non-linear gain supported value in the received attribute data returned by the TMA. That is, the maintenance end performs the non-linear adjustment to the TMA gain according to the non-linear gain supported value. The gain value in the non-linear gain adjustment every time must be the non-linear gain adjustment value supported by the TMA.

In a specific implementing solution, the amendment of the parameters in the Appendix D in the AISG protocol is shown in the Table 4. The parameter in the Appendix D in the AISG protocol is added comparing with the TMA attribute query list before amending, that is, the gain value of the non-linear gain supported by the TMA is added. The specific amended parameters are the content in the row where the Number of non-linear gain values supported (N) is located and the row where the Non-linear gain supported value number i (expressed in dB/4) is located in the Table 4.

| | | | |
|---|---|---|---|
| 0x19 | 1 | 8-bit integer | Number of non-linear gain values supported (N) |

0x19 means the gain value of the non-linear gain supported by the TMA, which is expressed by dB as the unit. The value range of the Number of non-linear gain values supported is N which means the number of the non-linear adjustment gain value supported by the TMA.

| | | | |
|---|---|---|---|
| i+0x19 | 1 | 8-bit integer | Non-linear gain supported value number i (expressed in dB/4) |

i+0x19 means the gain value of the non-linear gain supported by the TMA, which is expressed by dB/4 as the unit, that is, non-linear gain supported value i given as gain figure expressed in dB/4 where i means the serial number of the non-linear adjustment gain value supported by the TMA. The value range is 1~N.

The value range of the non-linear gain steps value supported by the TMA can be determined according to the added content in the Table 4.

An embodiment of the present invention further provides a system for gain adjustment of the TMA. The system includes a TMA and a maintenance end. A memory module and a gain adjustment module are arranged in the TMA and a responding gain adjustment module is arranged in the maintenance end.

The memory module is configured to store one or more step values of the non-linear gain adjustment supported by the TMA.

The gain adjustment module is configured to send information indicating whether the gain of the current TMA is adjustable and whether it supports the non-linear adjustment and the step value stored in the memory module so that the maintenance end may determine whether the gain of the current TMA is adjustable and whether it supports the non-linear adjustment according to the received information.

The gain adjustment module may also obtain the step information of the non-linear gain adjustment of the TMA from the message transmitted from the maintenance end, and perform the non-linear adjustment to the gain of TMA where the gain adjustment module is located according to the step information of the non-linear gain adjustment.

The responding gain adjustment module is configured to send a message carrying the gain adjustment information of the TMA to the gain adjustment module when the maintenance end determines that the current TMA is adjustable and supports the non-linear gain adjustment according to the received information; the TMA performs the non-linear adjustment to the gain of the current TMA.

The maintenance end is also provided with a query module.

The query module sends a query message carrying the information for querying whether the gain of the current TMA is adjustable and whether it supports the non-linear adjustment to the gain adjustment module.

The gain adjustment module returns information indicating whether the gain of the current TMA is adjustable and whether the current TMA supports the non-linear adjustment, and returns a step value of the non-linear gain adjustment supported by the current TMA to the responding gain adjustment module according to the query message received by the TMA.

The maintenance end is also provided with a judgment module.

The judgment module judges whether the gain of the current TMA is adjustable and whether it supports non-linear adjustment according to the information sent from the gain adjustment module to the responding gain adjustment module.

The responding gain adjusts module sets the TMA working mode according to the TMA mode setting command, Set TMA Mode when the judgment module judges that the gain of the current TMA is un-adjustable according to the information. The responding gain adjustment module performs the linear adjustment to the gain of the current TMA according to the given step value when the judgment module judges that the gain of the current TMA is adjustable but doesn't support the non-linear adjustment according to the information.

When the responding gain adjustment module determines that the gain of the current TMA is adjustable according to the information received by the maintenance end, the maintenance end sets the TMA working under the current adjustment gain or the minimum gain of the TMA through the TMA mode setting command, Set TMA Mode.

An embodiment of the present invention also provides a TMA. A memory module and a gain adjustment module are arranged in the TMA.

The memory module is configured to store one or more step values of the non-linear gain adjustment supported by the TMA;

The gain adjustment module is configured to send information indicating whether the current TMA is adjustable and whether it supports the non-linear adjustment and send the step value stored in the memory module to the maintenance end so that the maintenance end may judge whether the gain of the current TMA is adjustable and whether it supports the non-linear adjustment according to the received information.

The gain adjustment module receives a query message carrying information for querying whether the gain of the current TMA is adjustable and whether it supports the non-linear adjustment sent from the maintenance end, and returns the information indicating whether the gain of the current TMA is adjustable and whether it supports the non-linear gain adjustment, and returns the step value of the non-linear gain adjustment supported by the current TMA to the maintenance end so that the maintenance end may determine whether the gain of the current TMA is adjustable and whether it supports the non-linear gain adjustment according to the received information.

Thus, the embodiments of the present invention take the TMA adopting the AISG protocol as an example to illustrate the method and system of the gain adjustment of the TMA and the TMA. However, the present invention is not limited to these. The technical solutions that the information indicating whether the current TMA is adjustable and whether the current TMA supports the non-linear adjustment and a step value of the non-linear gain adjustment supported by the current TMA are sent from the TMA which stores the step value of the non-linear gain adjustment to the maintenance end; and the maintenance end performs the non-linear adjustment to the gain of the current TMA according to the step value of the non-linear gain adjustment supported by the current TMA when the maintenance end determines that the current TMA is adjustable and it supports the non-linear gain adjustment according to the received determination information are all in the protection scope of the present invention. For example, the above embodiments perform the non-linear adjustment to the TMA gain through the Set TMA Gain; and obtain the information indicating whether the TMA supports the non-linear adjustment and the step value of the non-linear gain adjustment supported by the current TMA through the TMA Get Supported Functions command or the TMA Get Device Data. The embodiments of the present invention may also perform the non-linearly adjustment to the TMA gain and obtain the information indicating whether the TMA supports the non-linear adjustment and the step value of the non-linear gain adjustment supported by the current TMA through other commands, e.g. through other messages alternating between the current TMA and the maintenance end or newly added messages and so on. All these solutions should be in the protection scope of the present invention.

Though illustration and description of the present disclosure have been given with reference to embodiments thereof, it should be appreciated by persons of ordinary skill in the art that various changed in forms and details can be made without deviation from the scope of this disclosure, which are determined by the appended claims.

## Claims

1. A method for gain adjustment of a tower mounted amplifier, TMA, comprising:
receiving from the TMA, by a maintenance end, information indicating whether gain of the TMA is adjustable and whether the TMA supports a non-linear gain adjustment, the number of non-linear gain adjustment values supported by the TMA and a step value of the non-linear gain adjustment supported by the TMA, wherein the information comprises: Gmax, the maximum gain value supported by the TMA, Gmin, the minimum gain value supported by the TMA, and Gain resolution, the step value of the linear adjustment gain supported by the TMA; and
performing, by the maintenance end, the non-linear gain adjustment to the gain of the TMA according to the received step value of the non-linear gain adjustment when the maintenance end determines that the gain of the TMA is adjustable and the TMA supports the non-linear gain adjustment according to the information received from the TMA.

2. The method according to claim 1, further comprising:
sending, by the maintenance end, a query message carrying information for querying whether the gain of the TMA is adjustable and whether the TMA supports the non-linear gain adjustment to the TMA; and
determining, by the maintenance end, that the gain of the TMA is adjustable and the TMA supports the non-linear gain adjustment according to the information received from the TMA in response to the query message.

3. The method according to claim 2, wherein the query message is: an obtaining command of the TMA supported function or an obtaining command for the TMA device data.

4. The method according to any one of claims 1 to 3, further comprising: setting, by the maintenance end, the TMA to work in a normal or bypass working mode through a TMA mode setting command, Set TMA Mode.

5. The method according to claim 4, wherein the normal working mode comprises:
the TMA works under a maximum gain when the gain of the TMA is un-adjustable; or
the TMA works under a currently adjustment gain set through a TMA gain setting command, Set TMA Gain, when the gain of the TMA is adjustable.

6. The method according to any one of claims 1 to 5, wherein the performing, by the maintenance end, the non-linear gain adjustment to the gain of the TMA comprises:
performing, by the maintenance end, the non-linear gain adjustment to the gain of the TMA through a TMA gain setting command which is Set TMA Gain.

7. A maintenance end for gain adjustment of a tower mounted amplifier, TMA, comprising :
a receiving module, configured to receive from the TMA, information indicating whether gain of the TMA is adjustable and whether the TMA supports a non-linear gain adjustment, the number of non-lineart gain adjustment values supported by the TMA and a step value of the non-linear gain adjustment supported by the TMA, wherein the information comprises: Gmax, the maximum gain value supported by the TMA, Gmin, the minimum gain value supported by the TMA, and Gain resolution, the step value of the linear adjustment gain supported by the TMA; and
a responding gain adjustment module, configured to perform the non-linear gain adjustment to the gain of the TMA according to the received step value of the non-linear gain adjustment when the maintenance end determines that the gain of the TMA is adjustable and the TMA supports the non-linear gain adjustment according to the information received by the receiving module.

8. The maintenance end according to claim 7, wherein the responding gain adjustment module is configured to perform the non-linear gain adjustment to gain of the TMA through sending a message carrying TMA gain adjustment information to the TMA according to the step value of the non-linear gain adjustment received by the receiving module.

9. The maintenance end according to any one of claims 7 to 8, wherein the maintenance end is further provided with a query module; wherein
the query module is configured to send a query message carrying information to the TMA to query whether the gain of the TMA is adjustable and whether the TMA supports the non-linear gain adjustment; and
the information received by the receiving module from the TMA is in response to the query message sent by the query module.

10. The maintenance end according to claim 9, wherein the maintenance end further comprises a judgment module configured to judge whether the gain of the TMA is adjustable and whether the TMA supports the non-linear gain adjustment according to the information received by the receiving module.

11. The maintenance end according to any one of claims 7 to 10, wherein the responding gain adjustment module is further configured to set a TMA in a normal or bypass working mode through a TMA mode setting command, Set TMA Mode.

## Patentansprüche

1. Verfahren zur Verstärkungseinstellung eines am Mast angebrachten Verstärkers, TMA, umfassend:
Empfangen von Informationen von dem TMA durch ein Instandhaltungsende, die Folgendes angeben: ob die Verstärkung des TMA einstellbar ist und ob der TMA eine nichtlineare Verstärkungseinstellung unterstützt, die Anzahl der durch den TMA unterstützten nichtlinearen Verstärkungseinstellungswerte und einen durch den TMA unterstützten Schrittwert der nichtlinearen Verstärkungseinstellung, wobei die Informationen Folgendes umfassen: Gmax, den maximalen durch den TMA unterstützten Verstärkungswert, Gmin, den minimalen durch den TMA unterstützten Verstärkungswert und Verstärkungsauflösung, den durch den TMA unterstützten Schrittwert der Lineareinstellungsverstärkung; und
Durchführen der nichtlinearen Verstärkungseinstellung durch das Instandhaltungsende an der Verstärkung des TMA gemäß dem empfangenen Schrittwert der nichtlinearen Verstärkungseinstellung, wenn das Instandhaltungsende gemäß den von dem TMA empfangenen Informationen bestimmt, dass die Verstärkung des TMA einstellbar ist und der TMA die nichtlineare Verstärkungseinstellung unterstützt.

2. Verfahren nach Anspruch 1, ferner umfassend:
Senden einer Abfragenachricht durch das Instandhaltungsende, die Informationen zum Abfragen führt, ob die Verstärkung des TMA einstellbar ist und ob der TMA die nichtlineare Verstärkungseinstellung unterstützt zu dem TMA; und
Bestimmen durch das Instandhaltungsende, dass die Verstärkung des TMA einstellbar ist und der TMA die nichtlineare Verstärkungseinstellung unterstützt, gemäß den als Reaktion auf die Abfragenachricht von dem TMA empfangenen Informationen.

3. Verfahren nach Anspruch 2, wobei die Abfragenachricht ein Erhaltebefehl der TMAunterstützten Funktion oder ein Erhaltebefehl für die TMA-Vorrichtungsdaten ist.

4. Verfahren nach einem der Ansprüche 1 bis 3, ferner umfassend: Einrichten des TMA durch das Instandhaltungsende, in einem Normal- oder Bypass-Arbeitsmodus zu arbeiten, durch einen TMA-Moduseinrichtbefehl "Set TMA Mode".

5. Verfahren nach Anspruch 4, wobei der Normal-Arbeitsmodus Folgendes umfasst:
der TMA arbeitet unter einer maximalen Verstärkung, wenn die Verstärkung des TMA nicht einstellbar ist; oder
der TMA arbeitet unter einer aktuellen Einstellungsverstärkung, die durch einen TMA-Verstärkungseinrichtbefehl "Set TMA Gain" eingerichtet wird, wenn die Verstärkung des TMA einstellbar ist.

6. Verfahren nach einem der Ansprüche 1 bis 5, wobei das Durchführen der nichtlinearen Verstärkungseinstellung an der Verstärkung des TMA durch das Instandhaltungsende Folgendes umfasst:
Durchführen der nichtlinearen Verstärkungseinstellung an der Verstärkung des TMA durch das Instandhaltungsende durch einen TMA-Verstärkungseinrichtbefehl, der "Set TMA Gain" ist.

7. Instandhaltungsende zur Verstärkungseinstellung eines am Mast angebrachten Verstärkers, TMA, umfassend:
ein Empfangsmodul, ausgelegt zum Empfangen von Informationen von dem TMA, die Folgendes angeben: ob die Verstärkung des TMA einstellbar ist und ob der TMA eine nichtlineare Verstärkungseinstellung unterstützt, die Anzahl der durch den TMA unterstützten nichtlinearen Verstärkungseinstellungswerte und einen durch den TMA unterstützten Schrittwert der nichtlinearen Verstärkungseinstellung, wobei die Informationen Folgendes umfassen: Gmax, den maximalen durch den TMA unterstützten Verstärkungswert, Gmin, den minimalen durch den TMA unterstützten Verstärkungswert und Verstärkungsauflösung, den durch den TMA unterstützten Schrittwert der Lineareinstellungsverstärkung; und
ein antwortendes Verstärkungseinstellungsmodul, ausgelegt zum Durchführen der nichtlinearen Verstärkungseinstellung an der Verstärkung des TMA gemäß dem empfangenen Schrittwert der nichtlinearen Verstärkungseinstellung, wenn das Instandhaltungsende gemäß den durch das Empfangsmodul empfangenen Informationen bestimmt, dass die Verstärkung des TMA einstellbar ist und der TMA die nichtlineare Verstärkungseinstellung unterstützt.

8. Instandhaltungsende nach Anspruch 7, wobei das antwortende Verstärkungseinstellungsmodul ausgelegt ist zum Durchführen der nichtlinearen Verstärkungseinstellung an der Verstärkung des TMA durch Senden einer Nachricht, die TMA-Verstärkungseinstellungsinformationen führt, zu dem TMA gemäß dem durch das Empfangsmodul empfangenen Schrittwert der nichtlinearen Verstärkungseinstellung.

9. Instandhaltungsende nach einem der Ansprüche 7 bis 8, wobei das Instandhaltungsende ferner mit einem Abfragemodul versehen ist; wobei
das Abfragemodul ausgelegt ist zum Senden einer Abfragenachricht, die Informationen führt, zu dem TMA, um abzufragen, ob die Verstärkung des TMA einstellbar ist und ob der TMA die nichtlineare Verstärkungseinstellung unterstützt; und
die durch das Empfangsmodul von dem TMA empfangenen Informationen als Reaktion auf die durch das Abfragemodul gesendete Abfragenachricht sind.

10. Instandhaltungsende nach Anspruch 9, wobei das Instandhaltungsende ferner ein Beurteilungsmodul umfasst, ausgelegt zum Beurteilen, ob die Verstärkung des TMA einstellbar ist und ob der TMA die nichtlineare Verstärkungseinstellung unterstützt gemäß den durch das Empfangsmodul empfangenen Informationen.

11. Instandhaltungsende nach einem der Ansprüche 7 bis 10, wobei das antwortende Verstärkungseinstellungsmodul ferner ausgelegt ist zum Einrichten des TMA, in einem Normal- oder Bypass-Arbeitsmodus zu arbeiten, durch einen TMA-Moduseinrichtbefehl "Set TMA Mode".

## Revendications

1. Procédé pour un ajustement de gain d'un amplificateur monté sur pylône, TMA, comprenant les étapes suivantes :
recevoir du TMA, par une extrémité de maintenance, des informations indiquant si un gain du TMA est ajustable et si le TMA supporte un ajustement de gain non-linéaire, le nombre de valeurs d'ajustement de gain non-linéaire supportées par le TMA et une valeur d'étape d'ajustement de gain non-linéaire supporté par le TMA, où les informations comprennent : Gmax, la valeur de gain maximum supportée par le TMA, Gmin, la valeur de gain minimum supportée par le TMA, et Résolution de gain, la valeur d'étape du gain d'ajustement linéaire supportée par le TMA ; et
effectuer, par l'extrémité de maintenance, l'ajustement de gain non-linéaire sur le gain du TMA conformément à la valeur d'étape reçue de l'ajustement de gain non-linéaire lorsque l'extrémité de maintenance détermine que le gain du TMA est ajustable et que le TMA supporte l'ajustement de gain non-linéaire conformément aux informations reçues du TMA.

2. Procédé selon la revendication 1, comprenant en outre les étapes suivantes :
envoyer, par l'extrémité de maintenance, un message d'interrogation acheminant des informations pour demander au TMA si le gain du TMA est ajustable et si le TMA supporte l'ajustement de gain non-linéaire ; et
déterminer, par l'extrémité de maintenance, que le gain du TMA est ajustable et que le TMA supporte l'ajustement de gain non-linéaire conformément aux informations reçues du TMA en réponse au message d'interrogation.

3. Procédé selon la revendication 2, dans lequel le message d'interrogation est : une commande d'obtention de la fonction supportée du TMA ou une commande d'obtention pour les données de dispositif du TMA.

4. Procédé selon l'une quelconque des revendications 1 à 3, comprenant en outre l'étape suivante : configurer, par l'extrémité de maintenance, le TMA pour qu'il fonctionne selon un mode de fonctionnement dérivé ou normal par l'intermédiaire d'une commande de paramétrage de mode du TMA, Set TMA Mode.

5. Procédé selon la revendication 4, dans lequel le mode de fonctionnement normal comprend :
le TMA fonctionnant avec un gain maximum lorsque le gain du TMA est non-ajustable ;
ou
le TMA fonctionne avec un gain d'ajustement en cours paramétré par l'intermédiaire d'une commande de paramétrage de gain du TMA, Set TMA Gain, lorsque le gain du TMA est ajustable.

6. Procédé selon l'une quelconque des revendications 1 à 5, dans lequel la réalisation, par l'extrémité de maintenance, de l'ajustement de gain non-linéaire au gain du TMA comprend l'étape suivante :
effectuer, par l'extrémité de maintenance, l'ajustement de gain non-linéaire au gain du TMA par l'intermédiaire d'une commande de paramétrage de gain de TMA qui est Set TMA Gain.

7. Extrémité de maintenance pour un ajustement de gain d'un amplificateur monté sur pylône, TMA, comprenant :
un module de réception, configuré pour recevoir du TMA des informations indiquant si un gain du TMA est ajustable et si le TMA supporte un ajustement de gain non-linéaire, le nombre de valeurs d'ajustement de gain non-linéaire supportées par le TMA et une valeur d'étape de l'ajustement de gain non-linéaire supportée par le TMA, où les informations comprennent : Gmax, la valeur de gain maximum supportée par le TMA, Gmin, la valeur de gain minimum supportée par le TMA, et Résolution de gain, la valeur d'étape du gain d'ajustement linéaire supportée par le TMA ; et
un module d'ajustement de gain réactif, configuré pour effectuer l'ajustement de gain non-linéaire au gain du TMA conformément à la valeur d'étape reçue de l'ajustement de gain non-linéaire lorsque l'extrémité de maintenance détermine que le gain du TMA est ajustable et que le TMA supporte l'ajustement de gain non-linéaire conformément aux informations reçues par le module de réception.

8. Extrémité de maintenance selon la revendication 7, dans lequel le module d'ajustement de gain réactif est configuré pour effectuer l'ajustement de gain non-linéaire au gain du TMA par l'intermédiaire de l'envoi d'un message acheminant des informations d'ajustement de gain du TMA au TMA, conformément à la valeur d'étape de l'ajustement de gain non-linéaire, reçues par le module de réception.

9. Extrémité de maintenance selon l'une quelconque des revendications 7 et 8, dans lequel l'extrémité de maintenance est en outre pourvue d'un module d'interrogation; où le module d'interrogation est configuré pour envoyer un message d'interrogation acheminant des informations au TMA pour demander si le gain du TMA est ajustable et si le TMA supporte l'ajustement de gain non-linéaire ; et
les informations reçues par le module de réception depuis le TMA sont délivrées en réponse au message d'interrogation envoyé par le module d'interrogation.

10. Extrémité de maintenance selon la revendication 9, dans lequel l'extrémité de maintenance comprend en outre un module de jugement configuré pour juger si le gain du TMA est ajustable et si le TMA supporte l'ajustement de gain non-linéaire conformément aux informations reçues par le module de réception.

11. Extrémité de maintenance selon l'une quelconque des revendications 7 à 10, dans lequel le module d'ajustement de gain réactif est en outre configuré pour paramétrer un TMA dans un mode de fonctionnement dérivé ou normal par l'intermédiaire d'une commande de paramétrage de mode de TMA, Set TMA Mode.
